(19) Europäisches Patentamt
European Patent Office
Office européen des brevets

(11) EP 0 989 139 A1

(12) EUROPEAN PATENT APPLICATION

(43) Date of publication:
29.03.2000 Bulletin 2000/13

(51) Int. Cl.⁷: **C08F 10/00**, C08F 4/642, H01B 3/44

(21) Application number: 99306536.6

(22) Date of filing: 19.08.1999

(84) Designated Contracting States:
AT BE CH CY DE DK ES FI FR GB GR IE IT LI LU MC NL PT SE
Designated Extension States:
AL LT LV MK RO SI

(30) Priority: 25.09.1998 US 160933

(71) Applicant:
UNION CARBIDE CHEMICALS & PLASTICS TECHNOLOGY CORPORATION
Danbury, Connecticut 06817-0001 (US)

(72) Inventors:
- Bai, Xinlai
Piscataway, New Jersey 08854 (US)
- Wasserman, Eric Paul
Hopewell, New Jersey 08525 (US)

(74) Representative:
Hayes, Adrian Chetwynd et al
Boult Wade Tennant,
27 Furnival Street
London EC4A 1PQ (GB)

# (54) Unbridged monocyclopentadienyl metal complex catalyst for olefin polymerization by reacting with particulate solids with functional groups

(57) There is provided a catalyst containing a transition metal precursor having the formula $(C_5R^1{}_5)MQ_3$, a particulate solid containing functional groups, a bulky hydroxyl-containing hydrocarbon, and an aluminoxane. There is also provided a polymerization process employing the catalyst composition, a polymer produced using the catalyst, and a cable produced therefrom.

EP 0 989 139 A1

## Description

Field of the Invention

The invention relates to a catalyst composition for olefin polymerization and a process for polymerizing polyolefins, especially copolymers of ethylene-alpha olefins, ethylene-alpha olefin-dienes, and polypropylene using a metallocene catalyst. More particularly, the invention concerns the polymerization of polyolefins having less than 50% crystallinity using a metallocene catalyst containing a transition metal complex, a particulate solid having functional groups, and an aluminoxane.

Background of the Invention

There has been a growing interest in the use of metallocenes for polyolefin production. Many metallocenes for polyolefin production are difficult and time-consuming to prepare, require large amounts of aluminoxane, and exhibit poor reactivity toward higher olefins, especially for making ethylene-alpha olefin copolymers and ethylene-alpha olefin-diene terpolymers. Moreover, the ethylene-alpha olefin copolymers and ethylene-alpha olefin-diene terpolymers prepared using these metallocenes often have undesirably low molecular weights (i.e., Mw less than 50,000).

The so-called "constrained geometry" catalysts such as those disclosed in EP 0 420 436 and EP 0 416 815 can provide a high comonomer response and a high molecular weight copolymer, but are difficult to prepare and purify, and, therefore, are expensive. Another drawback of the bridged amido-cyclopentadienyl titanium catalyst system is that in order to form an active oxide-supported catalyst, it is necessary to use fairly high levels of alumoxane (see, e.g., WO96/16092) or to employ mixtures of aluminum alkyl and an activator based on derivatives of tris(pentafluorophenyl)borane (see, e.g., WO95/07942), itself an expensive reagent, thus raising the cost of running the catalyst. In the constrained geometry catalyst art, such as in EP 0 416 815 A2 (page 2, lines 5-9 and 43-51), it is pointed out that the angle formed by the cyclopentadienyl centroid, transition metal, and amide nitrogen is critical to catalyst performance. Indeed, comparison of the published result using a bridged amidocyclopentadienyl titanium systems with similar unbridged systems has generally shown the unbridged analogs to be relatively inactive. One such system, described in U.S. Patent No. 5,625,016 shows very low activity, while having some of the desirable copolymerization behavior.

In contrast to the constrained geometry catalysts, the catalyst of the invention is unconstrained or unbridged and relatively easily and inexpensively prepared using commercially available starting materials. Further, the level of aluminoxane utilized can be lowered. That is, in the present invention, the precursor can be dried onto a support or with a spray drying material with Al:Ti ratios below 100:1 to form highly active catalysts with similar polymerization behavior to their unsupported analogs of the invention and polymerization behavior similar to constrained catalysts.

In Idemitsu Kosan JPO 8/231622, it is reported that the active catalyst may be formed starting from $(C_5Me_5)Ti(OMe)_3$ and that the polymer formed has a relatively wide or broad compositional distribution. The present invention does not utilize this precursor.

Recently, a new family of titanium-based single-site polyolefin catalysts which utilize a monocyclopentadienyltitanium precursor containing no bridging ligands has been described (U.S. Serial Nos. 08/987,829; 08/987,077; and 08/987,753). In these applications, a small Brønsted acid molecule was added to improve catalyst performance. In the present invention, the need for such an additive is eliminated, thus simplifying the process, yet the same homogeneous ethylene-olefin copolymers are obtained at high activity. It is often advantageous to provide a solid catalyst of defined particle size, either through impregnation of a porous inert substrate or by spray-drying catalyst components in the presence of an inert filler material. The particulate solid material employed in the present invention can also serve, when of sufficient pore volume, as the catalyst support for making a dry catalyst, or as the filler for a spray-dried catalyst composition. This invention provide catalysts with much better stability compare with prior art.

Typically, polyolefins such as EPRs and EPDMs are produced commercially using vanadium catalysts. In contrast to polyolefins produced using vanadium catalysts, those produced by the catalysts of the present invention have high molecular weight and narrower composition distribution (i.e., lower crystallinity at an equivalent alpha olefin content).

There is an on-going need to provide a catalyst employing a metallocene which is easy to prepare, does not require large amounts of aluminoxane and which readily copolymerizes to produce ethylene-alpha olefin copolymers, ethylene-alpha olefin-diene terpolymers, and polypropylene, as well as producing polyethylene.

SUMMARY OF THE INVENTION

Accordingly, the present invention provides a catalyst comprising:

(A) a transition metal compound having the formula: $(C_5R^1{}_5)MQ_3$, wherein each $R^1$ substituent is independently

selected from the group consisting of hydrogen, a $C_1$-$C_8$ alkyl, an aryl, and a heteroatom-substituted aryl or alkyl, with the proviso that no more than three $R^1$ substituents are hydrogen; and wherein two or more $R^1$ substituents may be linked together forming a ring; M is a transition metal of Group IVB of the Periodic Table of the Elements; and each Q is independently selected from the group consisting of a halide atom (F, Br, Cl, or I), a $C_2$-$C_{20}$ alkoxide, a $C_1$-$C_{20}$ amide, a $C_1$-$C_{20}$ carboxylate, and a $C_1$-$C_{20}$ carbamate;

(B) a particulate solid material having active surface groups at levels of 0.06 to 3 mmol/g as measured by diethylaluminum chloride titration;

(C) a bulky hydroxyl-containing hydrocarbon compound having the formula (1): $(C_6R^2{}_5)OH$, wherein each $R^2$ group is independently selected from the group consisting of hydrogen, halide, a $C_1$-$C_8$ alkyl, an aryl, a heteroatom substituted alkyl or aryl, wherein two or more $R^2$ groups may be linked together forming a ring, and in which at least one $R^2$ is represented by a $C_3$-$C_{12}$ linear or branched alkyl located at either or both the 2 and 6 position (i.e., the ortho positions relative to the OH group being in position 1) of the bulky phenol compound; or having the formula (2): $R^3H$, wherein $R^3$ is a tertiary alkoxy having 4 to 25 carbons, a siloxy moiety $(R^4)_3SiO$-, wherein each $R^4$ is the same or different and is a linear or branched alkyl having 1-8 carbon atoms, or a thiolato moiety having 4 to 25 carbons; and

(D) an aluminoxane.

There is also provided a catalyst preparation, a polymerization process employing the catalyst composition and a polymer produced using the catalyst, as well as a cable composition.

Detailed Description of the Invention

Catalyst. The catalyst contains a transition metal precursor (Component A); a particulate solid material having active surface groups (Component B); a bulky hydroxyl-containing hydrocarbon (Component C); and an aluminoxane (Component D) cocatalyst. The catalyst of the invention can be unsupported (that is, in slurry form), supported, spray dried, or used as a prepolymer.

Component A is a transition metal compound having the formula: $(C_5R^1{}_5)MQ_3$, wherein each $R^1$ substituent is independently selected from the group consisting of hydrogen, a $C_1$-$C_8$ alkyl, an aryl, and a heteroatom-substituted aryl or alkyl, with the proviso that no more than three $R^1$ substituents are hydrogen; and wherein two or more $R^1$ substituents may be linked together forming a ring; M is a transition metal of Group IVB of the Periodic Table of the Elements; and each Q is independently selected from the group consisting of a halide atom (F, Br, Cl, or I), a $C_2$-$C_{20}$ alkoxide, a $C_1$-$C_{20}$ amide, $C_1$-$C_{20}$ carboxylate, and a $C_1$-$C_{20}$ carbamate. Transition metals can include, for example, titanium, zirconium, and hafnium. Preferably, the transition metal, M, is titanium. Illustrative titanium compounds can include: pentamethylcyclopenta-dienyltitanium trichloride; pentamethylcyclopentadienyltitanium tri-bromide; pentamethylcyclopentadienyltitanium triiodide; 1,3-bis(trimethylsilyl)cyclopentadienyl-titanium trichloride; tetramethylcyclopentadienyltitanium trichloride; fluorenyltitanium trichloride; 4,5,6,7-tetrahydroindenyltitanium trichloride; 1,2,3,4,5,6,7,8-octahydro-fluorenyltitanium trichloride; 1,2,3,4-tetrahydrofluorenyl-titanium trichloride; 1,2,3-trimethylcyclopentadienyltitanium trichloride; 1,2,4-trimethylcyclopentadienyltitanium trichloride; 1-n-butyl-3-methyl-cyclopentadienyltitanium trichloride; methylindenyltitanium trichloride; 2-methylindenyltitanium trichloride; and 4,5,6,7-tetrahydro-2-methylindenyltitanium trichloride; cyclopentadienyltitanium tribenzoate; cyclopentadienyltitanium tris(diethycarbamate); cyclopentadienyltitanium tris(di-*tert*-butylamide); cyclopentadienyltitanium triphenoxide; pentamethylcyclopentadienyltitanium tribenzoate; pentamethylcyclopentadienyltitanium tri-pivalate; pentamethylcyclopentadienyltitanium triacetate; pentamethylcyclopentadienyltitanium tris(diethycarbamate); pentamethylcyclopentadienyltitanium tris(di-*tert*-butylamide); pentamethylcyclopentadienyltitanium triphenoxide; 1,3-bis(trimethylsilyl)cyclopentadienyltitanium tribenzoate; tetramethylcyclopentadienyltitanium tribenzoate; fluorenyltitanium trichloride; 4,5,6,7-tetrahydroindenyltitanium tribenzoate; 4,5,6,7-tetrahydroindenyltitanium tripivalate; 1,2,3,4,5,6,7,8-octahydrofluorenyltitanium tribenzoate; 1,2,3,4,5,6,7,8-octahydrofluorenyltitanium tris(diethylcarbamate); 1,2,3,4-tetrahydrofluorenyl-titanium tribenzoate; 1,2,3,4-tetrahydrofluorenyl-titanium tris(di-*tert*-butylamide); 1,2,3-trimethylcyclopentadienyltitanium tributyrate; 1,2,4-trimethylcyclopentadienyltitanium tribenzoate; 1,2,4-trimethylcyclopentadienyltitanium triacetate; 1-*n*-butyl-3-methylcyclopentadienyltitanium tribenzoate; 1-*n*-butyl-3-methylcyclopentadienyltitanium tripivalate; methylindenyltitanium tripropionate; 2-methylindenyltitanium tribenzoate; 2-methylindenyltitanium tris(di-*n*-butylcarbamate); 2-methylindenyltitanium triphenoxide; and 4,5,6,7-tetrahydro-2-methylindenyltitanium tribenzoate. Illustrative zirconium and hafnium compounds useful in the catalyst precursor of the invention by replacing titanium in the above-enumerated compounds with zirconium and hafnium.

Component B is a particulate solid material having active surface groups at levels of 0.006 to 3 mmol/g as measured by diethylaluminum chloride titration. Illustrative materials can include, for example, silica, alumina, titania, zeolites, clays, carbon black, poly(ethylene glycol), poly(vinyl alcohol), and poly.(ε-caprolactone). The particle size range of Component B can be from about 1 to about 2000 nanometers in diameter, preferably the particle size ranges

from about 50 to about 500 nanometers in diameter. Active surface groups can include -OH, -COOH, -SH, -CO, -C(O)H, - C(O)R, -OR, -COOR, -COOC, and mixtures thereof. Of these, -OH, - COOH, and -OR are preferred. In these groups R is defined as $C_1$-$C_8$ alkyl or aryl.

Component C a bulky hydroxyl-containing hydrocarbon compound having the formula (1): $(C_6R^2{}_5)OH$, wherein each $R^2$ group is independently selected from the group consisting of hydrogen, halide, a $C_1$-$C_8$ alkyl, an aryl, a heteroatom substituted alkyl or aryl, wherein two or more $R^2$ groups may be linked together forming a ring, and in which at least one $R^2$ is represented by a $C_3$-$C_{12}$ linear or branched alkyl located at either or both the 2 and 6 position (i.e., the ortho positions relative to the OH group being in position 1) of the bulky phenol compound; or having the formula (2): $R^3H$, wherein $R^3$ is a tertiary alkoxy having 4 to 25 carbons, a siloxy moiety $(R^4)_3SiO$-, wherein each $R^4$ is the same or different and is a linear or branched alkyl having 1-8 carbon atoms, or a thiolato moiety having 4 to 25 carbons. In the first formula, preferably none of the $R^2$ groups is a methoxy group. Illustrative examples of the bulky hydroxyl-containing hydrocarbon include tri-t-butylsilanol, tri-t-butylmethanol, 2,6-di-t-butylphenol, 2,4,6-tri-t-butylphenol, 3-ethyl-3-pentanol, 3,7-dimethyl-3-octanol, triisopropylsilanol, 2,6-di-t-butyl-4-methylphenol, 2,4-di-t-butylphenol, and t-butanethiol.

Component D is a cocatalyst capable of activating the catalyst precursor. Preferably, the activating cocatalyst is a linear or cyclic oligomeric poly(hydrocarbylaluminum oxide) which contain repeating units of the general formula -(Al(R*)O)-, where R* is hydrogen, an alkyl radical containing from 1 to about 12 carbon atoms, or an aryl radical such as a substituted or unsubstituted phenyl or naphthyl group. More preferably, the activating cocatalyst is an aluminoxane such as methylaluminoxane (MAO) or modified methylaluminoxane (MMAO).

Aluminoxanes are well known in the art and comprise oligomeric linear alkyl aluminoxanes represented by the formula:

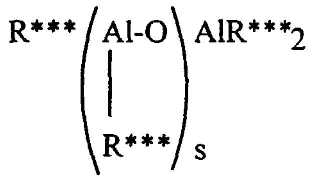

and oligomeric cyclic alkyl aluminoxanes of the formula:

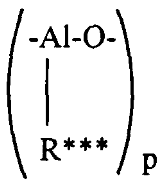

wherein s is 1-40, preferably 10-20; p is 3-40, preferably 3-20; and R*** is an alkyl group containing 1 to 12 carbon atoms, preferably methyl.

Aluminoxanes may be prepared in a variety of ways. Generally, a mixture of linear and cyclic aluminoxanes is obtained in the preparation of aluminoxanes from, for example, trimethylaluminum and water. For example, an aluminum alkyl may be treated with water in the form of a moist solvent. Alternatively, an aluminum alkyl, such as trimethylaluminum, may be contacted with a hydrated salt such as hydrated ferrous sulfate. The latter method comprises treating a dilute solution of trimethylaluminum in, for example, toluene with a suspension of ferrous sulfate heptahydrate. It is also possible to form methylaluminoxanes by the reaction of a tetraalkyldialuminoxane containing $C_2$ or higher alkyl groups with an amount of trimethylaluminum that is less than a stoichiometric excess. The synthesis of methylaluminoxanes may also be achieved by the reaction of a trialkyl aluminum compound or a tetraalkyldialuminoxane containing $C_2$ or higher alkyl groups with water to form a polyalkyl aluminoxane, which is then reacted with trimethylaluminum. Further, modified methylaluminoxanes, which contain both methyl groups and higher alkyl groups, i.e., isobutyl groups, may be synthesized by the reaction of a polyalkyl aluminoxane containing $C_2$ or higher alkyl groups with trimethylaluminum and then with water as disclosed in, for example, U.S. Patent No. 5,041,584.

The mole ratio of aluminum atoms contained in the poly(hydrocarbylaluminum oxide) to total metal atoms contained in the catalyst precursor is generally in the range of from about 2:1 to about 100,000:1, preferably in the range of from about 10:1 to about 10,000:1, and most preferably in the range of from about 50:1 to about 2,000:1.

Preferably, Component D is an alumoxane of the formula $(AlR^5O)_m(AlR^6O)_n$ in which $R^5$ is a methyl group, $R^6$ is a $C_1$-$C_8$ alkyl, m ranges from 3 to 50; and n ranges from 1 to 20. Most preferably, $R^6$ is a methyl group.

Components A and B are used in amounts such that the molar ratio of functional groups on Component B (defined as species which react with diethylaluminum chloride) to the amount of transition metal in Component A be in the range of 2:1 to 10,000:1, preferably about 2:1 to 1,000:1 and most preferably 3:1 to 200:1. The molar ratio of Component C to Component A ranges from about 5:1 to 1000:1; preferably about 10:1 to 300:1; and, most preferably is about 30:1 to 200:1. The molar ratio of Component D to Component A ranges from about 10:1 to 10,000:1, preferably about 30:1 to 2,000:1, and most preferably, is about 50:1 to 1000:1.

Process for Making the Catalyst. The individual catalyst components (Components A, B, C, and D) can be combined in any order prior to polymerization. Alternatively, the individual catalyst components can be fed to the polymerization reactor such that the catalyst is formed in-situ.

In one preferred embodiment (Method 1), the active catalyst is prepared as follows. In Step 1, Components A and B are mixed in an inert hydrocarbon solvent under an inert atmosphere (e.g., nitrogen) for at least 15 minutes or longer (e.g., up to 3 days). The components are combined such that the molar ratio of functional groups on Component B (defined as species which react with diethylaluminum chloride) to the amount of transition metal in Component A be at least 2:1. Typical inert solvents can include, for example, hexane, heptane, toluene, xylene, chlorobenzene, etc. Preferred among these solvents are hexane and toluene.

In Step 2, Components C and D are added to the mixture of Components A and B under an inert atmosphere (e.g., nitrogen and/or argon) and the mixture was stirred for at least 15 minutes or longer (e.g., for up to 3 days). The ratio of aluminum (in the aluminoxane, Component D) to the bulky hydroxyl-containing hydrocarbon compound (Component C) ranges from 1:1 to 1000:1; preferably 1:1 to 100:1; most preferably 1:1 to 10:1.

After stirring, the above catalyst slurry is transferred directly to polymerization reactor to carry out the desired polymerization, preferably a gas phase polymerization.

The preparation of Method 1 above, as well as other preparations (Methods 2 and 3) can be summarized as follows:

Method 1:

Components A and B are combined in a slurry to which Components C and D are added to form a final catalyst slurry to be fed to the polymerization reactor.

Method 2:

Components B and D are combined into a slurry to which Components A and C are added to form a final catalyst slurry to be fed to the polymerization reactor.

Method 3:

Components B, C, and D are stirred in a hydrocarbon solvent and dried in a vacuum to form dried particles. The dried particles are combined with Component A with stirring followed by drying in a vacuum to produce dried final catalyst particles.

Polymerization Process and Conditions. The above-described catalyst composition can be used for the polymerization of monomers (e.g., olefins, diolefins, and/or vinyl aromatic compounds) in a suspension, slurry, or gas phase process using known equip-ment and reaction conditions, and it is not limited to any specific type of reaction. However, the preferred polymerization process is a gas phase process employing a fluidized bed. Gas phase processes employable in the present invention can include so-called "conventional" gas phase processes and "condensed-mode" processes, and most recent, "liquid mode" processes.

In many processes, it is desirable to include a scavenger in the reactor to remove adventitious poisons such as water or oxygen before they can lower catalyst activity. In such cases, it is recommended that trialkylaluminum species not be used, but rather that methylalumoxane be employed for such purposes.

Conventional fluidized processes are disclosed, for example, in U.S. Patent Nos. 3,922,322; 4,035,560; 4,994,534, and 5,317,036.

Condensed mode polymerizations, including induced condensed mode, are taught, for example, in U.S. Patent Nos. 4,543,399; 4,588,790; 4,994,534; 5,317,036; 5,352,749; and 5,462,999. For polymerizations producing alpha olefin homopolymers and copolymers condensing mode operation is preferred.

Liquid mode or liquid monomer gas phase polymerization is described in U.S. Patent No. 4,453,471; U.S. Ser.

No. 510,375; and WO 96/04322 (PCT/US95/09826) and WO 96/04323 (PCT/US95/09827). For polymerizations such as ethylene-propylene copolymer (e.g., EPMs), ethylene-propylene-diene ter-polymer (e.g., EPDMs), and diolefin (e.g., butadiene) polymerizations, it is preferable to employ an inert particulate material, a so-called fluidization aid. When one or more dienes are employed it is preferred to employ liquid mode. Inert particulate materials are described, for example, in U.S. Patent No. 4,994,534 and include carbon black, silica, clay, talc, and mixtures thereof. Of these, carbon black, silica, and mixtures of them are preferred. When employed as fluidization aids, these inert particulate materials are used in amounts ranging from about 0.3 to about 80% by weight, preferably about 5 to 50% based on the weight of the polymer produced. The use of inert particulate materials as fluidization aids in polymer polymerization produces a polymer having a core-shell configuration such as that disclosed in U.S. Patent No. 5,304,588. The catalyst of the invention in combination with one or more of these fluidization aids produces a resin particle comprising an outer shell having a mixture of a polymer and an inert particulate material, wherein the inert particulate material is present in the outer shell in an amount higher than 75% by weight based on the weight of the outer shell; and an inner core having a mixture of inert particulate material and polymer, wherein the polymer is present in the inner core in an amount higher than 90% by weight based on the weight of the inner core. In the case of sticky polymers, these resin particles are produced by a fluidized bed polymerization process at or above the softening point of the sticky polymer.

The polymerizations can be carried out in a single reactor or multiple reactors, typically two or more in series, can also be employed. The essential parts of the reactor are the vessel, the bed, the gas distri-bution plate, inlet and outlet piping, at least one compressor, at least one cycle gas cooler, and a product discharge system. In the vessel, above the bed, there is a velocity reduction zone, and in the bed a reaction zone.

Generally, all of the above modes of polymerizing are carried out in a gas phase fluidized bed containing a "seed bed" of polymer which is the same or different from the polymer being produced. Preferably, the bed is made up of the same granular resin that is to be produced in the reactor.

The bed is fluidized using a fluidizing gas comprising the monomer or monomers being polymerized, initial feed, make-up feed, cycle (recycle) gas, inert carrier gas (e.g., nitrogen, argon, or inert hydrocarbon such as ethane, propane, isopentane) and, if desired. modifiers (e.g., hydrogen). Thus, during the course of a polymerization, the bed comprises formed polymer particles, growing polymer particles, catalyst particles, and optional flow aids (fluidization aids) fluidized by polymerizing and modifying gaseous components introduced at a flow rate or velocity sufficient to cause the particles to separate and act as a fluid.

In general, the polymerization conditions in the gas phase reactor are such that the temperature can range from sub-atmospheric to super-atmospheric, but is typically from about 0 to 120°C, preferably about 40 to 100°C, and most preferably about 40 to 80°C. Partial pressure will vary depending upon the particular monomer or monomers employed and the temperature of the polymerization, and it can range from about 1 to 300 psi (6.89 to 2,006 kiloPascals), preferably 1 to 100 psi (6.89 to 689 kiloPascals). Condensation temperatures of the monomers such as butadiene, isoprene, styrene are well known. In general, it is preferred to operate at a partial pressure slightly above to slightly below (that is, for example, ± 10°C for low boiling monomers) the dew point of the monomer.

Polymers Produced. Olefin polymers that may be produced according to the invention include, but are not limited to, ethylene homopolymers, homopolymers of linear or branched higher alpha-olefins containing 3 to about 20 carbon atoms, and interpolymers of ethylene and such higher alpha-olefins, with densities ranging from about 0.84 to about 0.96. Homopolymers and copolymers of propylene can also be produced by the inventive catalyst and process. Suitable higher alpha-olefins include, for example, propylene, 1-butene, 1-pentene, 1-hexene, 4-methyl-1-pentene, 1-octene, and 3,5,5-trimethyl-1-hexene. Preferably, the olefin polymers according to the invention can also be based on or contain conjugated or non-conjugated dienes, such as linear, branched, or cyclic hydrocarbon dienes having from about 4 to about 20, preferably 4 to 12, carbon atoms. Preferred dienes include 1,4-pentadiene, 1,5-hexadiene, 5-vinyl-2-norbornene, 1,7-octadiene, 7-methyl-1,6-octadiene, vinyl cyclohexene, dicyclopentadiene, butadiene, isobutylene, isoprene, ethylidene norbornene and the like. Aromatic compounds having vinyl unsaturation such as styrene and substituted styrenes, and polar vinyl monomers such as acrylonitrile, maleic acid esters, vinyl acetate, acrylate esters, methacrylate esters, vinyl trialkyl silanes and the like may be polymerized according to the invention as well. Specific olefin polymers that may be made according to the invention include, for example, polyethylene, polypropylene, ethylene/propylene rubbers (EPR's), ethylene/propylene/diene terpolymers (EPDM's), polybutadiene, polyisoprene, and the like.

The present invention provides a cost-effective catalyst and method for making compositionally homogeneous, high-molecular weight ethylene-alpha olefin copolymers with very high levels of alpha olefin. One advantage is that the catalyst has a very high comonomer response, so the ratio of alpha olefin to ethylene present in the reaction medium can be very low, which increases the partial pressure of ethylene possible in the reactor. This improves catalyst activity. It also lessens the level of residual comonomer which must be purged or otherwise recovered from the polymer after it exits the reactor. The catalyst is also suit-able for incorporation of non-conjugated dienes to form completely amorphous rubbery or elastomeric compositions. The catalyst's very high comonomer response also makes it a good candidate for the incorporation of long-chain branching into the polymer architecture through the insertion of vinyl-ended

polymer chains formed via β-hydride elimination. The ethylene copolymers produced by the present invention have polydispersity values (PDI) ranging from 2 to 4.6, preferably 2.6 to 4.2.

Polymers produced using the catalyst and/or process of the invention have utility in wire and cable applications, as well as in other articles such as molded and extruded articles such as hose, belting, roofing materials, tire components (tread, sidewall inner-liner, carcass, belt). Polyolefins produced using the catalyst and/or process of the invention can be cross-linked, vulcanized or cured using techniques known to those skilled in the art.

In particular, there is provided by the invention a cable comprising one or more electrical conductors, each, or a core of electrical conductors, surrounded by an insulating composition comprising a polymer produced in a gas phase polymerization process using the catalyst of the invention. Preferably, the polymer is polyethylene; a copolymer of ethylene, one or more alpha-olefins having 3 to 12 carbon atoms, and, optionally, a diene(s).

Conventional additives, which can be introduced into the cable anchor polymer formulation, are exemplified by antioxidants, coupling agents, ultraviolet absorbers or stabilizers, antistatic agents, pigments, dyes, nucleating agents, reinforcing fillers or polymer additives, slip agents, plasticizers, processing aids, lubricants, viscosity control agents, tackifiers, anti-blocking agents, surfactants, extenders oils, metal deactivators, voltage stabilizers, flame retardant fillers and additives, crosslinking agents, boosters, and catalysts, and smoke suppressants. Fillers and additives can be added in amounts ranging from less than about 0.1 to more than about 200 parts by weight for each 100 parts by weight of the base resin, for example, polyethylene.

Examples of antioxidants are: hindered phenols such as tetrakis[methylene(3,5-di-tert-butyl-4-hydroxyhydrocinnamate)]-methane, bis[(beta-(3,5 di-tert-butyl-4-hydroxybenzyl)-methylcarboxyethyl)]sulphide, 4,4'-thiobis(2-methyl-6-tert-butylphenol), 4,4'-thiobis(2-tert-butyl-5-methylphenol), 2,2'-thiobis(4-methyl-6-tert-butylphenol), and thiodiethylene bis(3,5 ditert-butyl-4-hydroxy)hydrocinnamate; phosphites and phosphonites such as tris(2,4-di-tert-butylphenyl) phosphite and di-tert-butylphenyl-phosphonite; thio compounds such as dilaurylthiodipropionate, dimyristylthiodipropionate, and distearylthiodipropionate; various siloxanes; and various amines such as polymerized 2,2,4-trimethyl-1,2-dihyroquinoline. Antioxidants can be used in amounts of about 0.1 to about 5 parts by weight per 100 parts by weight of polyethylene.

The resin can be crosslinked by adding a crosslinking agent to the composition or by making the resin hydrolyzable, which is accom-plished by adding hydrolyzable groups such as $-Si(OR)_3$ wherein R is a hydrocarbyl radical to the resin structure through copolymerization or grafting.

Suitable crosslinking agents are organic peroxides such as di-cumyl peroxide; 2,5-dimethyl- 2,5-di(t-butylperoxy) hexane; t-butyl cumyl peroxide; and 2,5-dimethyl-2,5-di(t-butylperoxy)hexane-3. Dicumyl peroxide is preferred.

Hydrolyzable groups can be added, for example, by copolymerizing ethylene with an ethylenically unsaturated compound having one or more $-Si(OR)_3$ groups such as vinyltrimethoxy- silane, vinyltriethoxysilane, and gamma-methacryloxypropyltrimethoxysilane or grafting these silane compounds to the resin in the presence of the aforementioned organic peroxides. The hydrolyzable resins are then crosslinked by moisture in the presence of a silanol condensation catalyst such as dibutyltin dilaurate, dioctyltin maleate, dibutyltin diacetate, stannous acetate, lead naphthenate, and zinc caprylate. Dibutyltin dilaurate is preferred.

Examples of hydrolyzable copolymers and hydrolyzable grafted copolymers are ethylene/ vinyltrimethoxy silane copolymer, ethy-lene/gamma- methacryloxypropyltrimethoxy silane copolymer, vinyltrimethoxy silane grafted ethylene/ethyl acrylate copolymer, vinyltrimethoxy silane grafted linear low density ethylene/1-butene copolymer, and vinyltrimethoxy silane grafted low density polyethylene.

The cable and/or polymer formulation can contain a polyethylene glycol (PEG) as taught in EP 0 735 545.

The cable of the invention can be prepared in various types of extruders, e.g., single or twin screw types. Compounding can be effected in the extruder or prior to extrusion in a conventional mixer such as Brabender™ mixer or Banbury™ mixer. A description of a conventional extruder can be found in U.S. Patent No. 4,857,600. A typical extruder has a hopper at its upstream end and a die at its downstream end. The hopper feeds into a barrel, which contains a screw. At the downstream end, between the end of the screw and the die, is a screen pack and a breaker plate. The screw portion of the extruder is considered to be divided up into three sections, the feed section, the compression section, and the metering section, and two zones, the back heat zone and the front heat zone, the sections and zones running from upstream to downstream. In the alternative, there can be multiple heating zones (more than two) along the axis running from upstream to downstream. If it has more than one barrel, the barrels are connected in series. The length to diameter ratio of each barrel is in the range of about 15:1 to about 30:1. In wire coating, where the material is crosslinked after extrusion, the die of the crosshead feeds directly into a heating zone, and this zone can be maintained at a temperature in the range of about 130°C to about 260°C, and preferably in the range of about 170°C to about 220°C.

All references cited herein are incorporated by reference.

Whereas the scope of the invention is set forth in the appended claims, the following specific examples illustrate certain aspects of the present invention. The examples are set forth for illustration only and are not to be construed as limitations on the invention, except as set forth in the claims. All parts and percentages are by weight unless otherwise specified.

Examples

Glossary and abbreviations:

| | |
|---|---|
| $C_3$=:$C_2$=, fill: | ratio of propylene to ethylene in the pressurization stage of the polymerization |
| $C_3$=:$C_2$=, feed: | ratio of propylene to ethylene in the period between pressurization and termination |
| DSC: | differential scanning calorimetry |
| DTBP: | 2,6-di-t-butylphenol |
| ENB: | 5-ethylidene-2-norbornene |
| FI: | flow index, ASTM standard $I_{21}$, in dg/min |
| ICP: | inductively coupled plasma method for elemental analysis |
| Irganox | Irganox 1076, a product of Ciba-Geigy |
| Kemamine | Kemamine AS-990, a product of Witco Corp. |
| MAO: | methylalumoxane (Ethyl/Albemarle, solution in toluene, 1.8 or 3.6 moles Al/L) |
| DEAC: | Diethylaluminum Chloride |
| DMO: | dimethyloctanol |
| PDI: | polydispersity index, or Mw/Mn |
| PRT: | peak recrystallization temperature, or the exothermic peak of he cooling trace in a DSC experiment, in degrees Celsius |
| SEC: | size-exclusion chromatography method for molecular weight estimation |
| TIBA | triisobutylaluminum, 0.87 mol/L in hexanes |

Materials

Pentamethylcyclopentadienyltitanium trichloride and indenyltitanium trichloride were obtained from Strem Chemicals Inc., and also used without further purification. Methylalumoxane was purchased from the Ethyl Corporation or the Albemarle Corporation and had a nominal concentration of 1.8 mol(Al)/L.

Procedure for Estimation of Propylene Content by Infrared Spectroscopy:

Thin polymer samples for spectroscopy were prepared either by casting a hexane solution of the polymer onto a disk of potassium bromide and then allowing the sample to dry or by placing a small amount of polymer between two sheets of poly(ethylene terephthalate) film and subjecting the polymer to pressure and melting temperatures. A Nicolet® Model 510 IR spectrometer was used to acquire the IR spectrum, with 32 scans for each sample and background spectrum and 4 $cm^{-1}$ resolution. Peak heights, suitably corrected for baseline absorbance, were measured at the following frequencies: 722, 1155, 1380, 1685, and 4250 $cm^{-1}$. If the absorbance at 1380 $cm^{-1}$ was less than 2.5, then the propylene content was calculated as follows:

$$wt\%\,C_3^= = 21.8-\left(15.4 \bullet 1n\left(\frac{A_{722}}{A_{1380}}\right)\right);$$

Otherwise, the propylene content was estimated by the following relationship:

$$wt\%\,C_3^= = 70.9-\left(18.7 \bullet 1n\left(\frac{A_{722}}{A_{1155}}\right)\right).$$

If ENB was present in the polymer, the weight fraction thereof was estimated by the following:

$$wt\%ENB = 0.04161+\left(\frac{13.336 \bullet A_{1685}}{A_{4250}}\right).$$

**Procedure for DEAC Treatment and Chloride Titration for Particulate Solid Materials To Measure Surface Functional Groups**

**DEAC Treatment:**

1) Weigh the desired amount of dried sample in a bottle in a glove box. Seal bottle well with a rubber septum and bring out.

2) Place bottle under nitrogen purge and add 50ml hexane and mmol/g of DEAC.

3) Allow sample to stir at room temperature under nitrogen pressure for 25 minutes.

4) After 25 minutes, centrifuge sample and decant the upper layer of solvent by using nitrogen pressure.

5) Once the solvent has been removed, keep the bottle under nitrogen and add 50ml hexane for washing any excess DEAC from sample.

6) Allow the sample to stir at room temperature for 2 minutes and then repeat steps (4) and (5) two more times for a total of three hexane washes.

7) After all the washes are completed, place the bottle with a needle in the septum in the antechamber of a glove box to allow it to dry for 1 hour under vacuum. Once the sample is dry, it is ready for testing.

**Chloride Titration:**

1) Weigh out approximately 1g of the DEAC treated sample in the glove box.

2) Bring sample out and place it in a beaker that contains 50ml distilled water and 1g of calcium carbonate.

3) Heat sample on a hot plate until it boils and then cool it on ice.

4) Add additional distilled water so the probe of the titrator will be submerged well.

5) Place sample stirring on plate and titrate with 0.1M silver nitrate solution until an end point is reached.

**Calculations:**

ml of Silver Nitrate(mmol/ml) x 0.1M Silver Nitrate Solution = mmol of Silver Nitrate titr.

Amt. of Surface Functional Groups = Amt. of Chlorine = mmol of Silver nitrate titrated / amount of sample used.

**Example 1.** Reacting $SiO_2$ with $Cp^*TiCl_3$ followed by treatment with DTBP and MAO resulted in an active polymerization catalyst.

Catalyst preparation: In the glove box under nitrogen, a small glass bottle was charged with magnetic stir bar, 1.0g silica (Davison 958, previous calcined at 600C). This silica contained surface functional group (hydroxyl group -OH) of 0.7mmol/g measured by DEAC titration (see above). The bottle was sealed and brought out of the glove box. In another small dried glass vial, 0.0145g of $Cp^*TiCl_3$ was charged and the vial was sealed and removed from the glove box. Once outside of the glove box, 5ml of toluene (Aldrich anhydrous toluene packaged under nitrogen) was added to the vial with a syringe. A $Cp^*TiCl_3$/toluene solution with concentration of 0.01M was formed. In a third small dried glass vial, 2.06g 2,6-di-t-butylphenol (DTBP) was added and the vial was sealed. The vial was removed from the glove box and 20ml of anhydrous toluene (Aldrich) was added to form a DTBP in toluene solution with concentration of 0.5M.
To the bottle with 1.0g of silica, 30 ml of dry hexane was added under nitrogen to form a slurry. To this bottle, 0.5ml of the $Cp^*TiCl_3$ solution (0.01M in toluene) was added (0.005mmol Ti in the bottle). This mixture was stirred for 3

hours at room temperature under nitrogen. After 3 hours, 1.0ml of DTBP solution (0.5M in toluene) and 10ml of MAO solution (0.5M in toluene) were added. The mixture was stirred at room temperature under nitrogen for 30 minutes. A final catalyst slurry was formed which contained 0.005mmol Ti, 0.5mmol DTBP and 5mmol MAO.

Polymerization. The 1L stainless-steel Fluitron® reactor was baked for one hour at 100 degrees C with nitrogen constantly flowing through it. It is then cooled to 40 degrees C and charged with 500ml hexane. The catalyst made above was transferred to the reactor by means of a cannula. The reactor was sealed and the temperature was brought up to 60 degrees C. Next, the reactor was charged with ethylene ($C_2$) and propylene ($C_3$) gases ($C_3/C_2$ fill ratio: 1/1) until the reactor pressure reached 90 psi. The ratio of the gases was adjusted to $C_3/C_2$=0.2. The polymerization was carried out for 1 hour after the introduction of the monomer gases.

Polymerization was terminated by injecting 2ml of ethanol killing solution (0.5g BHT, 1.0g Kermamine®, 0.5g Irganox® in 125ml ethanol). The $C_2$ and $C_3$ gases were shut down and the reactor was vented and cooled to room temperature. Polymer was scooped out, blended in methanol and dried in a vacuum oven at 40 degrees C overnight. Collected polymer weighed 26.7g, for a catalyst activity of 5.34kg (EPM)/mmol Ti/h. The polymer had a flow index of 2.4. The propylene ($C_3$) content of the polymer measured by FTIR was 31.7%(wt). The peak recrystallization temperature of the DSC of the polymer was -0.4 degrees C.

**Example 2:** Reacting $SiO_2$ with Cp*$TiCl_3$ followed by treatment with DTBP and MAO resulted in an active polymerization catalyst.

Catalyst preparation. This example was similar to Example 1, except that 15ml of MAO solution(0.5M in toluene) instead of 10ml of MAO solution was used in second step stirring. A final catalyst contained 0.005mmol Ti, 0.5mmol DTBP, and 1.5mmol MAO.

Polymerization. Polymerization was carried out as in Example 1. Collected polymer weighed 32.2g, for a catalyst activity of 6.44kg (EPM)/mmol Ti/h. The polymer had a flow index of 0.68. The $C_3$ content of the polymer measured by FTIR was 27.1% (wt). Peak recrystallization temperature of the DSC of the polymer was -10.9 degrees C.

**Example 3:** Reacting $SiO_2$ with MAO first followed by addition of Cp*$TiCl_3$ and DTBP resulted in an active polymerization catalyst.

Catalyst preparation: In the glove box under nitrogen, a small glass bottle was charged with a magnetic stir bar, 1.0g silica (Davison 958, previous calcined at 600C). This silica contained surface functional group (hydroxyl group -OH) of 0.7mmol/g measured by DEAC titration the same as Example 1. The bottle was sealed and brought out of the glove box. In another small dried glass vial, 0.0145g of Cp*$TiCl_3$ was charged and the vial was sealed and removed from the glove box. Once outside of the glove box, 5ml of toluene (Aldrich anhydrous toluene packaged under nitrogen) was added to the vial with a syringe. A Cp*$TiCl_3$/toluene solution with concentration of 0.01M was formed. In a third small dried glass vial, 2.06g of DTBP was added and the vial was sealed. The vial was removed from the glove box and 20ml of anhydrous toluene (Aldrich) was added to form a DTBP in toluene solution with concentration of 0.5M.

To the bottle with 1.0g of silica, 25ml of dry hexane was added under nitrogen to form a slurry. To this bottle, 1.43 ml of MAO solution (3.5M in toluene) was added. The mixture was stirred for 3 hours at room temperature under nitrogen. After 3 hours, 0.5 ml of the Cp*$TiCl_3$ solution (0.01M in toluene) and 1.0ml of DTBP solution (0.5M in toluene) were added to the bottle. This mixture was stirred at room temperature under nitrogen for 30min. The final catalyst was formed which contained 0.005 mmol Ti, 5 mmol MAO, and 0.5 mmol DTBP.

Polymerization. A polymerization as described in Example 1 was carried out. The collected polymer weighed 34.5g, for a catalyst activity of 6.9kg(EPM)/mmolTi/h. The polymer had a flow index of 2.5. The $C_3$ content of the polymer is 31%(wt). The peak recrystallization temperature on DSC of the polymer was -48 degrees C.

**Example 4:** Reacting SiO2 with MAO first followed by treatment with Cp*$TiCl_3$ and DTBP resulted in an active polymerization catalyst.

Catalyst preparation. Same as Example 3.

Polymerization. Similar to Example 3, except that 3ml of ENB was added to the polymerization to make EPDM instead of EPM polymer. Two milliliters of ENB was added to the catalyst slurry right before it was transferred to the polymerization reactor. An aliquot of ENB (0.5mL) was injected to the reactor under pressure at polymerization times of 10 min and 30 min. Therefore, altogether 3mL of ENB was charged to the polymerization. After the polymerization, the recovered polymer weighed 22.8g, for catalyst activity of 4.56kg(EPDM)/mmol Ti/h. The polymer did not flow in a flow indexer because of the high molecular weight. The peak recrystallization temperature of the DSC was -0.67 degrees C.

**Example 5:** Reacting MOS (MAO on Silica) with Cp*$TiCl_3$ and DTBP resulted in an active polymerization catalyst.

MOS Preparation. 604g of silica which was pre-calcined at 600 degrees C was charged to a mix tank and 2165g of toluene was charged to the same mix tank to make a slurry. MAO (715 ml) in toluene solution (30wt%) was charged to the slurry and approximately 10 degree C exotherm was observed. The temperature of the mix tank was brought to 100 degrees C and the slurry was mixed for 5 hours. Mixing was continued at ambient overnight. The mixing slurry was dried with full vacuum at temperature of 60 degrees C or lower. A white free flowing powder was obtained. ICP analysis showed the MAO loading was 3.25mmolAl/gMOS.

Catalyst Preparation. In the glove box under nitrogen, a small glass bottle was charged with magnetic stir bar and 1.0g MOS which is prepared according the above method and stored in the dry box. The bottle was sealed and brought out of the dry box. To this bottle, 30ml of dry hexane was added to form a slurry. After the MOS/hexane slurry was stirred for 30 min, 0.5ml of the Cp*$TiCl_3$ solution (0.01M in toluene) and 1.0ml of DTBP solution (0.5M in toluene) were added to the bottle. This mixture was then stirred at room temperature under nitrogen for another 30min. The final catalyst was formed which contained 0.005mmol Ti, 3.25mmol MAO and 0.5mmol DTBP.

Polymerization. A polymerization similar to Example 1 was carried out. The collected polymer weighed 38.0g, for a catalyst activity of 7.62kg(EPM)/mmolTi/h. The polymer had a flow index of 2.7. The $C_3$ content of the polymer measured by FTIR was 33.9%(by wt).

**Example 6:** Reacting MOS with additional MAO followed with Cp*TiCl3 and DTBP resulted a more active polymerization catalyst.

Catalyst Preparation. In a glove box under nitrogen, a small glass bottle was charged with a magnetic stir bar and 1.0g MOS which contained 3.25mmol Al/g as in Example 5. The bottle was sealed and brought outside of the box and 30ml of dry hexane was added to it under nitrogen to form a slurry. To this MOS/hexane slurry, 0.5ml of MAO solution (3.5M in toluene) was added. This mixture was stirred at room temperature under nitrogen for 30 min. Afterwards, 0.5ml of the Cp*$TiCl_3$ solution (0.01M in toluene) and 1.0ml of DTBP solution (0.5M in toluene) were added to the bottle. The mixture was stirred at room temperature under nitrogen for another 30min. The final catalyst was formed which contained 0.005mmol Ti, 5.0mmol MAO, and 0.5mmol DTBP.

Polymerization. A polymerization identical to Example 1 was carried out. The collected polymer weighed 93.1g, for a catalyst activity of 18.62kg(EPM)/mmolTi/h. The polymer had a flow index of 1.4. The $C_3$ content of the polymer measured by FTIR was 27.5%(by wt).

**Example 7:**

A catalyst preparation and polymerization similar to Example 6 was performed, except ENB was added to make EPDM instead of EPM polymer during the polymerization. ENB (2 ml) was added to the catalyst slurry right before it was transferred to the polymerization reactor. An aliquot of ENB (0.5mL) was injected to the reactor under pressure at polymerization times of 10 minutes and 30 minutes. Therefore, altogether 3mL of ENB was charged to the polymerization. After the polymerization, the recovered polymer weighed 48.0g, for a catalyst activity of 9.6kg(EPDM)/mmol Ti/h. The $C_3$ content of the polymer was 46.2%(wt) and the ENB content of the polymer was 4.7%(wt), all measured by FTIR.

**Example 8:** Reacting carbon black (fluidization aid) with Cp*TiCl3 followed by treatment with DTBP and MAO resulted in an active polymerization catalyst.

Catalyst Preparation. In the glove box, a small dried glass bottle was charged with a magnetic stir bar and 5.0g of flow aid carbon black (dried N-650), referred to as carbon black of CB FA. The carbon black FA had been dried under vacuum at 200 degrees C for at least 4 hours and stored under nitrogen. After this drying, this carbon black FA contained 0.06mmol/g functional groups measured by DEAC titration (see above on functional group measurement). The bottle was sealed and brought out of the glove box. To another small dried glass vial, 0.0145g of Cp*$TiCl_3$ was charged and the vial was sealed and removed from the glove box. Once outside of the glove box, 5ml of toluene (Aldrich anhydrous toluene packaged under nitrogen) was added to the vial containing Cp*$TiCl_3$ to form a Cp*$TiCl_3$/toluene solution with a concentration of 0.01M. To a third small dried glass vial, 2.06g of DTBP was added and the vial was sealed. The vial was removed from the glove box and 20ml of anhydrous toluene (Aldrich) was added to form a DTBP/toluene solution with concentration of 0.5M.

To the bottle with 5g carbon black FA, 50ml of dry hexane was added under nitrogen to form a slurry. To this bottle, 0.5ml of Cp*$TiCl_3$ solution (0.01M in toluene) was added. There was a total of 0.005mmol Ti in the bottle. This mixture was stirred for 3 hours at room temperature under nitrogen. After 3 hours, 1.0ml of the DTBP solution (0.5M in

toluene) and 0.71ml of MAO solution (3.5M in toluene) were added. This mixture was stirred for another 30 minutes. A final catalyst was formed which contained 5g carbon black FA, hexane, 0.005mmol Ti, 0.5mmol DTBP, and 2.5mmol MAO.

Polymerization. The 1L stainless-steel Fluitron® reactor was baked for one hour at 100 degrees C with nitrogen constantly flowing through it. It was then cooled to 40 degrees C and charged with 500ml hexane. The catalyst slurry made above was transferred to the reactor using a cannula. The reactor was sealed and the temperature was brought to 60°C. Ethylene ($C_2$) and propylene ($C_3$) gases were charged to the reactor ($C_3/C_2$ fill ratio: 0.75 to 1) until the reactor pressure reached 90psi. The ratio of the gases was adjusted to $C_3/C_2$=0.2. The polymerization was carried out for 1 hour after the introduction of the monomer gases.

Polymerization was terminated by injecting 2ml of ethanol killing solution (0.5g BHT, 1.0g Kemamine®, 0.5g Irganox® in 125ml of ethanol). The $C_2$ and $C_3$ gases were shut down and the reactor was vented and cooled to room temperature. Polymer was scooped out, blended in methanol and dried in a vacuum oven at 40 degrees C overnight. Collected polymer weighed 22.1g, for catalyst activity of 4.41kg(EPM)/mmol Ti/h. The polymer did not flow in a flow indexer because of high molecular weight. The $C_3$ content of the polymer measured by FTIR was 21.8%(wt).

**Example 9:** Reacting carbon black FA with MAO followed with Cp*$TiCl_3$ and DTBP resulted in an active polymerization catalyst.

Catalyst Preparation. In the glove box, a small dried glass bottle was charged with 5.0g dried CB FA (N-650) and a magnetic stir bar. Carbon black FA had been dried under vacuum at 200°C for at least 4 hours and then stored under nitrogen. After this drying, the carbon black FA contained 0.06mmol/g functional groups measured by DEAC titration (see above on functional group measurement). This bottle was sealed and brought out of the glove box. In another small dried glass vial, 0.0145g of Cp*$TiCl_3$ was charged and the vial was sealed and removed from the glove box. Once outside of the glove box, 5ml of toluene (Aldrich anhydrous toluene packaged under nitrogen) added to the vial containing Cp*$TiCl_3$ to form a Cp*$TiCl_3$/toluene solution with a concentration of 0.01M. To a third small dried glass vial, 2.06g of DTBP was added and the vial was sealed. Anhydrous toluene (20 ml, Aldrich) was added to it to form a DTBP in toluene solution with concentration of 0.5M.

To the bottle with 5g of carbon black, 50ml hexane was added under nitrogen to make a slurry. To this slurry, 0.71ml of MAO solution(3.5M in toluene) was added. This mixture was stirred for 3 hours at room temperature under nitrogen. After 3 hours, 0.5ml of Cp*$TiCl_3$ solution (0.01M in toluene made above) and 1.0ml of the DTBP solution (0.5M in toluene made above) were added. The mixture was stirred for another 30minutes. The final catalyst was formed which contained 5g carbon black, hexane, 0.005mmol Ti, 0.5mmol DTBP, 2.5mmol of MAO.

Polymerization: The 1L stainless-steel Fluitron® reactor was baked for one hour at 100°C with nitrogen constantly flowing through it. It was cooled to 40°C and charged with 500ml hexane. The catalyst slurry made above was transferred by cannula to the reactor. The reactor was sealed and the temperature was brought to 60°C. Ethylene ($C_2$) and propylene ($C_3$) were charged to the reactor with $C_3/C_2$ ratio of 0.75 to 1 until the reactor pressure reached 90psi. The ratio of the gases was then adjusted to $C_3/C_2$ = 0.2. The polymerization was carried out for 1 hour after the introduction of the monomer gases.

Polymerization was terminated by injecting 2ml of ethanol killing solution (0.5g BHT, 1.0g Kemamine®,0.5g Irganox® in 125ml of ethanol). The $C_2$ and $C_3$ gases were shut down and the reactor was vented and cooled to room temperature. Polymer was scooped out, blended in methanol and dried in a vacuum oven at 40°C overnight. The collected polymer weighed 31.6g, for a catalyst activity of 6.32kg(EPM)/mmol Ti/h. The polymer flow index was 6.2. The peak recrystallization temperature of the DSC of polymer was -6.1 degrees C.

**Example 10:** Reacting Cp*$TiCl_3$ with activated carbon followed by treatment with DTBP and MAO resulted in an active polymerization catalyst.

A similar experiment as Example 8 was conducted, except that 1.0g of activated carbon instead of 5.0g of flow aid carbon black was used. This activated carbon (Darco G-60) has been dried under vacuum at 200°C for at least 4 hours and then stored under nitrogen. After this drying, the activated carbon contained about 0.6mmol/g functional groups measured by DEAC titration (see above on functional group measurement). After polymerization, 9.2g of polymer was recovered, for a catalyst activity of 3.68kg(EPM)/mmolTi/h. The peak recrystallization temperature on the DSC of the polymer was - 10.6 degrees C.

**Example 11:**

Similar experiment as Example 10 was carried out, except that 3.0g instead of 1.0g of activated carbon (Darco G-60) was used in the catalyst preparation. After polymerization, 10.6g of polymer was recovered, for the catalyst activity of 2.12kg(EPM)/mmol Ti/h.

**Example 12:** Reacting activated carbon with MAO followed by treatment with Cp*$TiCl_3$ and DTBP resulted in an active polymerization catalyst.

A similar experiment as in example 9 was carried out, except that 1.0g of activated carbon (Darco G-60) instead of 5.0g FA CB was used in the catalyst preparation. After the polymerization, 38.2g of polymer was collected, for the catalyst activity of 7.64kg(EPM)/mmolTi/h. The polymer flow index is 0.89. The $C_3$ content of polymer measured by FTIR was 35.6%(wt). The peak recrystallization temperature of the DSC of the polymer was -33.7 degrees C.

**Example 13:** Reacting MOS with additional MAO follow by treatment with Cp*$TiCl_3$ and DMO(3.7-dimethyl-3-octanol) resulted in an active polymerization catalyst.

In a glove box, a dry bottle was charged with 1.0g MOS (3.25mmole Al/g) and a magnetic stir bar. The bottle was sealed and removed from the dry box. Dry hexane (15 ml) was added to the bottle under nitrogen to make a slurry. MAO (0.53 ml) in toluene solution (3.36M) was added to this slurry. This mixture was stirred for 30 minutes under nitrogen at room temperature. Afterwards, 1.0ml of DMO (3,7-dimethyl-3-octanol) solution (0.5mmol DMO) was added to this bottle and the mixture was stirred for another 30 minutes at room temperature. Next, 0.5ml of Cp*TiCl3 solution (0.01M in toluene) was added to the bottle and the mixture was stirred for another 30 minutes at room temperature. The final catalyst mixture was formed which contained 1.0 g MOS; 0.005 mmol Ti; 5mmole Al; 0.5mmole DMO.

The 1L stainless-steel Fluitron® reactor was baked for one hour at 100°C with nitrogen constantly flowing through it. It was then cooled to 40°C and charged with 500ml hexane. The activated catalyst mixture made above was transferred to the reactor via a cannula. The reactor is sealed and the temperature was brought to 60°C. Ethylene($C_2$) and propylene($C_3$) gases ($C_3/C_2$ fill ratio = 0.75 to 1) was charged to the reactor until the reactor pressure reached 90psi. The ratio of the gases was then adjusted to $C_3/C_2$ = 0.2. The polymerization was carried out for 1 hour after the introduction of the monomer gases.

The polymerization was terminated by injecting 2ml of ethanol killing solution (0.5g BHT, 1.0g Kemamine®, 0.5g Irganox® in 125ml of ethanol). The $C_2$ and $C_3$ gases were shut down and the reactor was vented and cooled to room temperature. Polymer was scooped out, blended in methanol and dried in a vacuum oven at 40°C overnight. The collected polymer weighed 20.5g, for a catalyst activity of 4.09kg(EPM)/mmol Ti/hr.

**Example 14:** Preparation of the dry SiO2 supported catalyst with two step drying procedure and the evaluation of this catalyst in EPM polymerization.

In a glove box, a dry bottle was charged with 1.0g of MOS (MAO on silica, with 3.25mmole Al/g) and a magnetic stir bar. The bottle was sealed and removed from the dry box. Fifteen milliliters of dry hexane was added to this bottle under nitrogen to make a slurry. A MAO solution (0.53 ml) (3.36M concentration, total 1.75mmol) was added to make a 5mmoleAl/g loading. This mixture was stirred for 30min. under nitrogen at room temperature. To this bottle, 0.5mmole DTBP (1.0ml of 0.5M 2,6-di-t-butylphenol solution in toluene) was added and stirred for another 30min. at room temperature. The mixture was dried under vacuum to form dry powder. Dry hexane (15 ml) was added to this dry powder to form a slurry. Two milliliters of Cp*TiCl3 solution (0.01M in toluene) was added to the slurry and the mixture was stirred for another 30 minutes. The resulting mixture was dried by vacuum to form the final catalyst which was a free flowing powder. The target loadings of this catalyst were 0.02mmol Ti/g; 5mmol Al/g; 0.5mmol DTBP/g.

Polymerization with the supported catalyst. A 1L stainless-steel Fluitron® reactor was baked for one hour at 100°C with nitrogen constantly flowing through it. It was then cooled to 40°C and charged with 500ml hexane. One gram of supported catalyst made above was mixed with 10ml Kaydol® oil, then transferred via cannula to the reactor. The reactor was sealed and the temperature was brought to 60°C. Ethylene($C_2$) and propylene($C_3$) gases ($C_3/C_2$ fill ratio = 0.75 to 1) were charged to the reactor until the reactor pressure reached 90psi. The ratio of the gases was then adjusted to a $C_3/C_2$ = 0.2. The polymerization was carried out for 1 hour after the introduction of the monomer gases.

Polymerization was terminated by injecting 2ml of ethanol killing solution (0.5g BHT, 1.0g Kemamine®, 0.5g Irganox® in 125ml of ethanol). The $C_2$ and $C_3$ gases were shut down and the reactor was vented and cooled to room temperature. Polymer was scooped out, blended in methanol and dried in a vacuum oven at 40°C overnight. The collected polymer weighed 54.5g, for a catalyst activity of 2.73kg(EPM)/mmol Ti/hr and a flow index of 3.35. The $C_3$ content of the polymer measured by NMR is 28.8% (wt).

**Example 15:** Preparation of a dry activated carbon supported catalyst with a two step drying procedure and the evaluation of the catalyst in EPM polymerization.

In the glove box, 1.0g activated carbon(dried Dargo-G60) and a magnetic stir bar were charged into a oven dried bottle. The activated carbon has been dried under vacuum at 200°C for at least 4 hours then stored in the dry box. After this drying, the activated carbon contained about 0.6mmol/g functional groups measured by DEAC titration (see above on functional group measurement). The bottle was sealed and removed from the dry box and 15ml dry hexane was added to this bottle under nitrogen to make a slurry. MAO (0.74 ml, 3.36M) in toluene solution was charged to the bottle and the mixture was stirred for 30min. under nitrogen at room temperature. Afterwards, 1.0ml of DTBP in toluene solution (0.5M) was added and stirred for another 30min. at room temperature. This mixture was dried using vacuum to form a solid carbon supported with MAO and DTBP. Hexane (15 ml) was added to this solid to form a slurry again and 2ml of Cp*TiCl3 solution (0.01M in toluene) was added to the bottle. The resulting slurry was stirred for 30min. under nitrogen at room temperature. This mixture was dried again under vacuum to form a final supported catalyst which was free flowing dry powder. The target loadings of this catalyst were 0.02mmol Ti/g; 2.5mmol Al/g; 0.5mmol DTBP/g.

Polymerization with this activated carbon supported catalyst. Similar polymerization as Example 14 was carried out with catalyst. The collected polymer weighed 13.9, for a catalyst activity of 695 g(EPM)/mmol Ti/h.

**Comparative Example 1:** This example demonstrates that Component B (solid particulate activators) is critical for the formation of an active catalyst.

A similar experiment to that of Example 1 was carried out except that no $SiO_2$ or FA CB or activated carbon was used. After finishing the same polymerization, only 0.8g of polymer was collected for the catalyst activity of 0.16kg(EPM)/mmolTi/h. This experiment indicated that Component B (solid particulate activator) is essential for active catalyst formation.

**Comparative Example 2:** This example demonstrates that Component C is critical for the formation of active catalyst.

A similar experiment to Example 1 was carried out, except that no DTBP was used in the catalyst preparation. After finishing the same polymerization, only 1.3g of polymer was collected for catalyst activity of 0.26Kg(EPM)/mmol Ti/h. This experiment indicated that Component C is critical to the formation of active catalyst.

**Claims**

**1.** A catalyst comprising:

(A) a transition metal compound having the formula: $(C_5R^1{}_5)MQ_3$, wherein each $R^1$ substituent is independently selected from the group consisting of hydrogen, a $C_1$-$C_8$ alkyl, an aryl, and a heteroatom-substituted aryl or alkyl, with the proviso that no more than three $R^1$ substituents are hydrogen; and wherein two or more $R^1$ substituents may be linked together forming a ring; M is a transition metal of Group IVB of the Periodic Table of the Elements; and each Q is independently selected from the group consisting of a halide atom, a $C_2$-$C_{20}$ alkoxide, a $C_1$-$C_{20}$ amide, a $C_1$-$C_{20}$ carboxylate, and a $C_1$-$C_{20}$ carbamate;

(B) a particulate solid material having active surface groups at levels of 0.006 to 3 mmol/g as measured by diethylaluminum chloride titration;

(C) a bulky hydroxyl-containing hydrocarbon compound having the formula (1): $(C_6R^2{}_5)OH$, wherein each $R^2$ group is independently selected from the group consisting of hydrogen, halide, a $C_1$-$C_8$ alkyl, an aryl, a heteroatom substituted alkyl or aryl, wherein two or more $R^2$ groups may be linked together forming a ring and in which at least one $R^2$ is represented by a $C_3$-$C_{12}$ linear or branched alkyl located at either or both the 2 and 6 position of the bulky hydroxyl-containing compound; or having the formula (2) : $R^3H$, wherein $R^3$ is a tertiary alkoxy having 4 to 25 carbons, a siloxy moiety $(R^4)_3SiO$-,wherein each $R^4$ is the same or different and is a linear or branched alkyl having 1-8 carbon atoms, or a thiolato moiety having 4 to 25 carbons; and

(D) an aluminoxane.

**2.** The catalyst of Claim 1 wherein the catalyst is in powder form.

**3.** The catalyst of Claim 1 or 2 wherein M is titanium, Q is chloride, the particulate solid is porous silica containing 0.1

to 2 hydroxyl groups per gram, and the aluminoxane is methylalumoxane.

**4.** The catalyst of Claim 1 or 2 wherein M is titanium; each Q is independently selected from the group consisting of a $C_1$-$C_{20}$ carboxylate and $C_1$-$C_{20}$ carbamate; the particulate solid is porous silica containing 0.1 to 2 hydroxyl groups per gram; and the aluminoxane is modified methylalumoxane.

**5.** The catalyst of any one of the preceding Claims wherein the molar ratio of functional groups as measured by diethylaluminum chloride titration on Component B to the amount of Component A ranges from 2:1 to 200:1; the molar ratio of Component C to Component A ranges from 5:1 to 1,000:1; and the molar ratio of Component D to Component A ranges from 10:1 to 10,000:1.

**6.** The catalyst of any one of the preceding Claims wherein Component B is employed as a support or spray drying material in an amount ranging from 7 to 200 g/mmol transition metal.

**7.** A process for the polymerization of at least one olefin which comprises contacting said olefin under polymerization conditions with a catalyst as defined in any one of the preceding Claims.

**8.** The process of Claim 7 wherein the polymer produced is selected from the group consisting of polyethylene, polypropylene, an ethylene-alpha olefin copolymer, an ethylene-alpha olefin-diene terpolymer, and a propylene copolymer.

**9.** A process for producing a cable comprising one or more electrical conductors which comprises surrounding each conductor, or a core of electrical conductors, with an insulating composition comprising a polymer produced in a gas phase polymerization process using the catalyst of any one of Claims 1 to 6 or produced by the process of Claim 7 or 8.

**10.** The process of Claim 9 wherein the polymer is selected from the group consisting of polyethylene; a copolymer of ethylene and one or more alpha-olefins having 3 to 12 carbon atoms; and a copolymer of ethylene, one or more alpha-olefins having 3 to 12 carbon atoms, and at least one diene.

European Patent Office

# EUROPEAN SEARCH REPORT

Application Number
EP 99 30 6536

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | EP 0 781 783 A (BASF AG) 2 July 1997 (1997-07-02) * page 7, line 18 - page 9, line 55 * * page 10, line 1 - line 26 * see experiment 16 * table 1 * | 1-8 | C08F10/00 C08F4/642 H01B3/44 |
| Y | EP 0 514 594 A (MOBIL OIL CORP) 25 November 1992 (1992-11-25) * page 2, line 48 - line 54; example 1 * | 1-8 | |
| D,A | EP 0 735 545 A (UNION CARBIDE CHEM PLASTIC) 2 October 1996 (1996-10-02) * claim 8 * | 9,10 | |
| D,P,X | EP 0 922 711 A (UNION CARBIDE CHEM PLASTIC) 16 June 1999 (1999-06-16) * examples 18-22 * * claims 9,10 * | 1-10 | |

TECHNICAL FIELDS SEARCHED (Int.Cl.7)
C08F
H01B

The present search report has been drawn up for all claims

| Place of search | Date of completion of the search | Examiner |
|---|---|---|
| THE HAGUE | 21 January 2000 | Parry, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT ON EUROPEAN PATENT APPLICATION NO.** EP 99 30 6536

This annex lists the patent family members relating to the patent documents cited in the above-mentioned European search report.
The members are as contained in the European Patent Office EDP file on
The European Patent Office is in no way liable for these particulars which are merely given for the purpose of information.

21-01-2000

| Patent document cited in search report | Publication date | Patent family member(s) | Publication date |
|---|---|---|---|
| EP 0781783 A | 02-07-1997 | DE 59602084 D | 08-07-1999 |
| | | ES 2135157 T | 16-10-1999 |
| | | JP 9291107 A | 11-11-1997 |
| | | US 5908903 A | 01-06-1999 |
| EP 0514594 A | 25-11-1992 | US 5032562 A | 16-07-1991 |
| | | CA 2042961 A | 22-11-1992 |
| | | JP 5105718 A | 27-04-1993 |
| EP 0735545 A | 02-10-1996 | AT 181453 T | 15-07-1999 |
| | | AU 708233 B | 29-07-1999 |
| | | AU 5038296 A | 10-10-1996 |
| | | BR 9601205 A | 06-01-1998 |
| | | CA 2173038 A | 01-10-1996 |
| | | DE 69602872 D | 22-07-1999 |
| | | DE 69602872 T | 21-10-1999 |
| | | ES 2135169 T | 16-10-1999 |
| EP 0922711 A | 16-06-1999 | US 5962362 A | 05-10-1999 |
| | | JP 11236407 A | 31-08-1999 |

EPO FORM P0459

For more details about this annex : see Official Journal of the European Patent Office, No. 12/82